# EUROPEAN PATENT APPLICATION

(11) **EP 1 868 131 A1**
(43) Date of publication of application: **19.12.2007**
(21) Application number: 06012288.4
(22) Date of filing: 14.06.2006
(51) Int. Cl.: G06F 21/20

(54) **Method and system for secure user authentication**

(71) Applicant: Vodafone Holding GmbH, 40213 Düsseldorf (DE)
(72) Inventor: Gaida, Dr. Klemens, 40213 Düsseldorf (DE); Cameron, Neill, 06650 Le Rouret (FR)
(74) Representative: Cullinane, Marietta Bettina

(57) **Abstract**

The present invention relates to a method for secure user authentication in a communication system, wherein the system comprises at least one remote server (3) with a central authentication unit and at least one input device (2). The method is characterized in that at least two pieces of information (OTP, IMEI, IMSI) associated to the user are included in the authentication, wherein at least one piece of information (IMEI/ IMSI) is related to a hardware token (4) belonging to the user. In addition, a system for secure user authentication in a communication system, wherein the system comprises at least one remote server (3) and at least one input device (2) is described, which is characterized in that the system further comprises at least one hardware token (4) associated to the user.

## Description

The present invention relates to a method and a system for secure user authentication.

With the increase of misuse and fraud of data by third parties, the need for securely storing and using personal data has become mandatory. In general, personal identification, such as a personal identification number is used, to authenticate the user towards a system or a device. Since personal identification numbers may be used by an unauthorized user, it has been suggested to use biometrics such as a fingerprint for authentication methods. The biometric data cannot be replicated and the authentication process is thus more secure. The usage of biometric data, however, necessitates appropriate reading devices to read for example a fingerprint or the iris structure. These authentication devices incur high production costs. Another method for secure authentication is described in US 2004/0073809 A1. In the method described therein the user utilizes a cursor for securely logging into a network. The system comprises a server having a back-end component to generate a graphic which may include a keyboard. This graphic can be displayed on a client. The system further includes a cursor control coupled to the client to indicate cursor coordinates on the keyboard. The sequence of cursor coordinates is sent back to the server for authentication.

The drawback of the described login method is that only the information to be entered via the graphics is representative of the user, who is attempting to log on. The graphics in contrast are randomly generated and are independent of the actual user, who is trying to log in. Hence, an unauthorized user, who gained possession of the password or PIN, which is to be entered, could use the graphics displayed to him for entry and could thus log in.

Therefore, the problem to be solved by the present invention is to provide a method and a system for secure authentication, wherein the risk of misuse can be further decreased over the known prior art.

The invention is based on the finding that more than one piece of information of the authentication process is linked to the authorized user.

According to a first aspect of the invention the problem is solved by a method for secure user authentication in a communication system, wherein the system comprises at least one remote server with a central authentication unit and at least one input device. The method is characterized in that at least two pieces of information associated to the user are included in the authentication process, wherein at least one piece of information is related to a hardware token belonging to the user.

The piece of information associated to a user and related to a hardware token assigned to the hardware token or merely stored on the hardware token. The hardware token may be a mobile device, such as a mobile phone, or a storage device such as a subscriber identity module (SIM) card within the mobile device. The piece of information may for example be the International Mobile Subscriber Identity (IMSI) of the user which is normally stored on the card used in a mobile phone or other mobile device, the International Mobile Equipment Identity (IMEI) number which uniquely identifies mobile devices in a communication network, or the Mobile Subscriber ISDN Number (MSISDN), which is also stored on the SIM card of the mobile phone.

The additional piece of information not related to the hardware token may be a password or a personal identification number.

By including two pieces of information associated to the user in an authentication process, the reliability of the method can be increased. Since at least one piece of information is related to a hardware token belonging to the user, fraud can be prevented. In contrast to user information, such as a User ID and a password, which may be altered and may be used by any user, who obtained knowledge thereof, information related to a hardware token, can not be changed and can easily be verified. Hence, the level of security can be increased.

The remote server is preferably a home subscriber server (HSS) of a mobile communication network. This server comprises an authentication centre (AuC), which is a secured data base, where a copy the secure codes stored on the SIM-card of a mobile phone are being stored and managed. With the remote server being included in the authentication process, user related information can be verified.

In one embodiment the method comprises the step of generating entry graphics to be displayed on the input device based on one of the pieces of information, preferably based on the piece of information related to the hardware token.

Basing the generation of entry graphics on at least one of the pieces of information, preferably on the piece of information related to the hardware token, allows for personalized entry graphics. According to the present invention, basing the generating of the entry graphics on a piece of information can mean, that the generating of the algorithm underlying the entry graphics may comprise the piece of information, that the generated algorithm may be assigned to or stored in connection with this piece of information and/or that the piece of information and the entry graphics or the algorithm underlying the graphics may be assigned correlating parameters such as a validity period.

The entry graphics are preferably a set of keys which may be randomly arranged and may differ in size and layout. The algorithm underlying the graphics will be capable of translating a position or coordinate within the entry graphics to an alphanumeric symbol assigned to this position or coordinate. The input via these entry graphics may be performed by means of a cursor or, if the input device comprises a touch sensitive display, by touching the screen of the input device.

One piece of information may be randomly generated and transmitted to the hardware token of the user. This piece of information may be a set of keys or a code and will hereinafter also be referred to as a password. As the password is preferably generated for each login event, it will also be referred to as a one time password (OTP). Generating a new password for each login process makes the authentication more reliably. In addition, the password and preferably the OTP is transmitted to a device, which is different from the input device, over which access to programs or data is to be established. This method increases the security, as a third person would have to have access to the input device as well as to the device or token, to which the password is being transmitted. The password may be transmitted to the hardware token and preferably to the mobile device or mobile phone of the user. The transmission of the password to the mobile phone is secure as mobile devices such as mobile phones can be identified within a communication network and a transmission of a password to the wrong recipient can thereby be avoided.

According to one embodiment, the input entered via the entry graphics is transmitted to the remote server and is being compared to information previously transmitted to the hardware token. If the entry graphics are based on an algorithm, wherein only the position or coordinates of the input, e.g. the cursor position at the time of clicking, will be captured and this positional information will be translated into alphanumeric symbols, preferably only the positional information will be transmitted to the remote server and will be translated there. With this embodiment of the inventive method third parties watching the user enter the password at the screen of the input device, will not be able to derive the password from the location of clicking as the association of the location or coordinates and the symbol is laid down in an algorithm, which is not known to the third party. Also monitoring or sniffing of data, which is being transferred to the remote server, will not provide third parties with the password, if only the location information is being transmitted. It is, however, also possible to translate the positional information at the input device and transmit the input data to the server. Also in this embodiment, third parties will not be able to derive the password from the locations, where the user clicked on the entry graphics at the input device.

At the remote server the received or translated input data, e.g. the password, may be compared to the information, e.g. the password, previously sent to the hardware token, in particular to the mobile phone. If the password matches the password, which was originally transmitted, the user will be authenticated and may be logged in. The remote server will send an authentication confirmation to the computer to indicate, that the user may be logged in, i.e. may be provided with the requested access to the desired data and/or applications.

The comparison at the remote server can be performed, as the password which was originally sent may be stored in combination with a piece of information relating to the hardware token. For example, the OTP may be stored in combination with the telephone number or the IMEI of the mobile phone. In addition or alternatively, the algorithm may comprise the IMEI or any other piece of information relating to the token.

According to a preferred embodiment of the inventive method, a validity period is assigned to the piece of information, which is transmitted to the hardware token, and/or to the entry graphics on the input device or the underlying algorithm. For example, the OTP may be marked at the server to only have a validity period of several seconds. Thereby the risk of fraud can be further decreased, as the legitimate user will in general enter the OTP at the computer soon and third parties obtaining information about the OTP later will not be able to login. Where both, the OTP as well as the algorithm for the entry graphics, are being managed at the remote server, it is possible to adjust the validity periods of these two items to each other. The algorithm for displaying the graphics may for example be set to expire at the same time as the OTP. In addition or alternatively, the entry graphics may change upon each activation by the user, i.e. upon each click. It is also possible that the algorithm prescribes that the entry graphics are changed after preset time intervals. The changing of the entry graphics is preferably the re-shuffling of keys displayed on the input device.

As explained above, the hardware token may be a mobile phone and the piece of information related to the hardware token may be the international mobile equipment identity number (IMEI). This number uniquely identifies the mobile phone and is thus suitable for the use in authentication processes.

According to another aspect, the invention relates to a system for secure user authentication in a communication system, wherein the system comprises at least one remote server with a central authentication unit and at least one input device. The system is characterized in that it further comprises at least one hardware token associated to the user. This setup, where in contrast to prior art solutions, not only an input device and an authentication unit are part of the system, the security level can be increased.

The remote server may comprise a receiving unit for receiving data from the input device and a processing unit for processing received data. The processing may comprise converting input data from the entry graphics at the input device to alphanumeric symbols and/or for comparing received or processed data to stored information.

In this context input data relates to positional information such as coordinates and/or to processed data, which may be the password derived from the positional information based on the underlying algorithm. Whether the data is received at the server as coordinates or as the translated password will depend on where the algorithm for translation is being stored. The comparison, which is being carried out at the remote server will preferably be a comparison of the received or translated password to the password, which was originally transmitted to the hardware token.

The hardware token may be a mobile end device, in particular a mobile phone and/or a SIM card.

The hardware token may comprise a processing unit for extracting information from the information stored on the hardware token and transmitting the extracted information to the at least one remote server. The extracted information is preferably user related information and may for example be the IMEI or any information stored on the SIM card.

With the present invention it, hence, becomes possible to offer a secure authentication process. In particular, the combination of a one time password being transmitted to a mobile phone, for example via SMS, and the display of entry graphics at the input device, for input of the password offers a certain degree of security. Since according to the present invention, in addition the graphics may be altered and the graphics as well as the password may be time dimensioned, the level of security can be increased even further.

Features and advantages described in context with the inventive method also apply to the inventive system and vice versa.

The present invention will now be described again with reference to the enclosed figures, wherein:
Figure 1 shows a schematic view of an embodiment of the inventive system;
Figures 2a and 2b show schematic views of entry graphics at different times; and
Figure 3 shows a flow chart, including one embodiment of the inventive method.

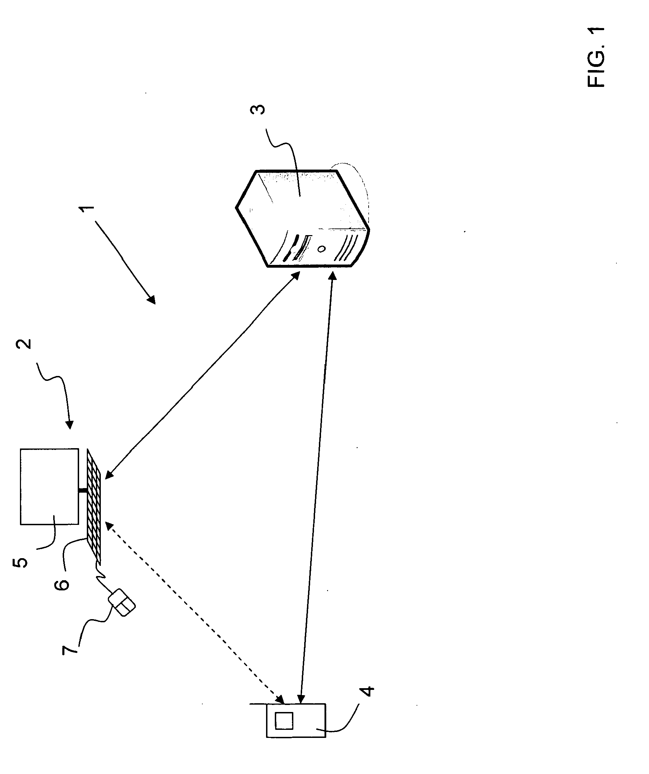

In Figure 1 a system 1 wherein the inventive method can be performed is shown. The system 1 comprises an input device 2, which may be a personal computer or a laptop, and will hereinafter also be referred to as the computer, a remote server 3 as well as a mobile device 4, which is depicted as a mobile phone.

The input device 2 comprises a display or screen 5 as well as a control unit, which may comprise a key board 6 and/or a mouse 7. The input device may communicate with the remote server 3 via the Internet or any other available communication network. The communication between the remote server 3 and the mobile phone 4 can be carried out over a UMTS, GPRS or any other available communication network.

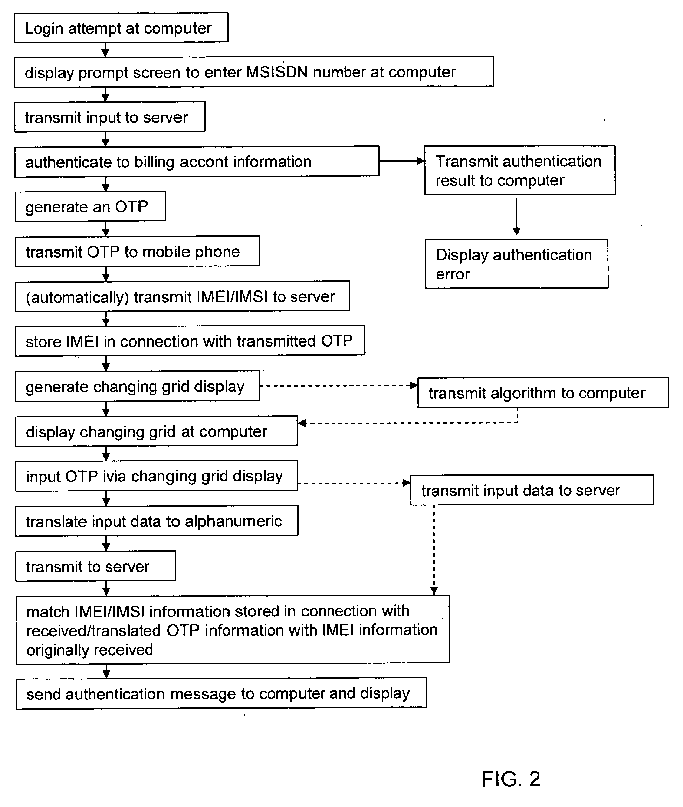

If a user wishes to log in to a specific application or data base from the input device 2 a respective login or authentication process will be initiated. In Figure 2 one embodiment of an authentication process is shown and will now be described, using the reference numbers as shown in Figure 1.

The user may trigger an authentication process by pressing a button on the key board 6 or by selecting an icon in the screen 5 of the computer, for example by using the mouse 7 to navigate to the icon. Once the computer receives the login request or detects the login attempt, a prompt will be displayed on the screen 5 of the input device 2. The prompt may be displayed in a separate window on the screen 5. In the prompt the user will be invited to provide the telephone number, in particular his MSISDN number. Once this information is available, the input device 2 may establish a connection to the remote server 3, preferably the home subscriber server (HSS), which comprises the so called authentication centre (AuC). Via this connection the telephone number entered at the input device 2 may be transmitted to the server 3. The server 3 may authenticate the telephone number to billing information that is stored in the server 3 or in a separate unit. For example, the AuC of the HSS may authenticate the telephone number via the IP Multimedia Subsystem (IMS) according to the diameter protocol to billing account information available for the telephone number.

If the authentication fails, the authentication result may be transmitted back to the computer 2 and an authentication error or failure message may be displayed on the display 5 of the computer 2.

If the authentication is positive, the server 3 will generate a unique code or password will sent this one time password (OTP) to the mobile phone 4 via the communication network. The transmission may for example be done via SMS.

Once the mobile phone 4 receives the SMS, the mobile phone 4 may either generate a prompt for the user to enter the international mobile equipment identity (IMEI) number of his mobile phone 4 and/or international mobile subscriber identity (IMSI) on the mobile phone 4. Alternatively, the mobile phone 4 will automatically transmit the IMEI or IMSI number to the server 3.

The thus received piece of information, which is related to the mobile phone 4, which can serve as a hardware token, will be stored at the server 3 in connection with the OTP generated and transmitted to that mobile phone 4 earlier.

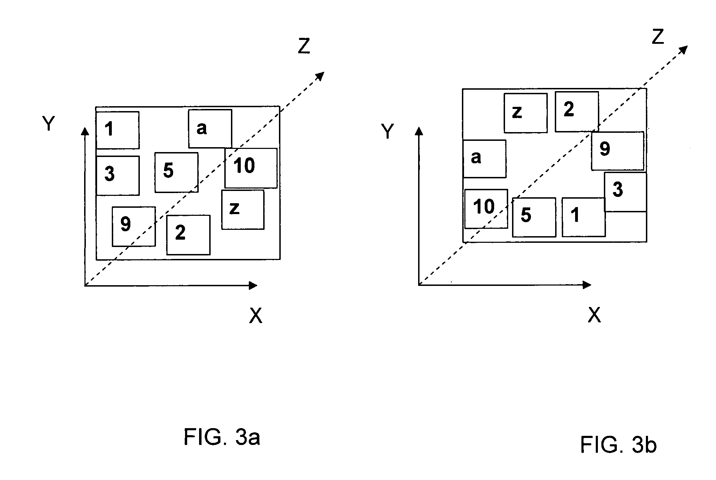

An algorithm, which is preferably time dimensioned and correlates a specific location on the display 5 of the computer 2 to an alphanumeric symbol, will be generated. The algorithm is transmitted to the computer 2, where entry graphics will be displayed. The graphics displayed will be a keyboard or any other arrangement of symbols. One example of the entry graphics will later be described in detail with reference to Figure 3. The algorithm may be generated at the server 3 and may be transmitted to the computer 2. Alternatively the algorithm may be generated at the computer 2. In either case the entry graphics, for example in the form of a changing grid display, will be displayed on the screen 5 of the computer. By means of this entry graphics the user can enter the password, which was sent to his mobile phone 4 at the computer 2.

The entry of the password will be done by using the mouse 7 and holding over the desired symbol in the entry graphics before clicking on the symbol. Alternatively the keyboard 6 and in particular the cursor keys of the keyboard 6 may be used to enter the password in the entry graphics. If the computer 2 is enabled to sense contact with the screen 5, the input may also be done by touching the screen 5 at the appropriate positions.

By clicking on one of the symbols of the entry graphics, the computer 2 will be able to register the location or coordinates of where the user clicked. Based on the algorithm transmitted to or generated at the computer 2, the will be able to translate this positional information or these coordinates to an alphanumeric symbol. These symbols representing the password, which was entered, are then transmitted back to the server 3. Alternatively, the positional information or the coordinates are transmitted to the server 3, where it will be translated into the respective alphanumeric symbol.

Once the password is received or is translated at the server 3, the server will match the IMEI/IMSI stored in connection with this password with the IMEI/IMSI, which was originally received from the mobile phone 4.

If the stored information at the server 3 and the received information match, an authentication message will be send to the computer 2, where it can be displayed to the user.

In Figure 3a and 3b entry graphics which may be displayed at the screen 5 of the computer 2 are shown. In Figure 3a numbers and letters are arranged in a random fashion, based on the algorithm underlying the entry graphics. If a user selects for example the symbol "a" of the entry graphics, the computer will record this input as an input with the respective x- and y-coordinates of the x-y-system depicted in Figure 3. In the computer 2 or the server 3 these coordinates will be translated back to the symbol, that the user selected. In the present example the x- and y-coordinates will be translated back to "a".

If the algorithm provides, the entry graphics may be time dimensioned. In that case, as depicted in Figure 3b, the entry graphics will change after a certain time interval (on the Z-axis in Figure 3b) has passed. After that time interval the symbols in the graphic display may be re-shuffled, i.e. re-ordered and maybe even resized.

It may also be provided, that the entry graphics either disappear or do not function in the described manner after a certain time has elapsed. Preferably the time frame, before the entry graphics lapse to function, is adjusted to the validity period of the password that is to be entered via these entry graphics.

It may also be implemented according to the present invention that the entry graphics change every time a user selects a symbol. In this case the graphics shown in Figure 3b will appear after the user made his selection regardless of the time elapsed.

With the present invention and in particular with the combination of the usage of a OTP, a location mapping authentication on the computer by means of changing grid as entry graphics as well as an algorithm, which is time dimensioned, and a re-shuffling of the graphics display, the security of an authentication process can be optimized.

## Claims

1. Method for secure user authentication in a communication system, wherein the system comprises at least one remote server (3) with a central authentication unit and at least one input device (2), **characterized in that** at least two pieces of information (OTP, IMEI, IMSI) associated to the user are included in the authentication, wherein at least one piece of information (IMEI/ IMSI) is related to a hardware token (4) belonging to the user.

2. Method according to claim 1, **characterized in that** the method comprises the step of generating entry graphics to be displayed on the input device based on one of the pieces of information (OTP, IMEI, IMSI), preferably based on the piece of information (IMEI, IMSI) related to the hardware token (4).

3. Method according to claim 1 or 2, **characterized in that** one piece of information (OTP) is randomly generated and transmitted to the hardware token (4) of the user.

4. Method according to any of claims 2 or 3, **characterized in that** the input entered via the entry graphics is transmitted to the remote server (3) and is being compared to information previously transmitted to the hardware token (4).

5. Method according to claim 3 or 4, **characterized in that** a validity period is assigned to the piece of information (OTP) transmitted to the hardware token and/or to the entry graphics on the input device (2).

6. Method according to any of claims 1 to 5, **characterized in that** the hardware token (4) is a mobile phone and the piece of information related to the hardware token is the international mobile equipment identity number (IMEI).

7. System for secure user authentication in a communication system, wherein the system comprises at least one remote server (3) and at least one input device (2), **characterized in that** the system further comprises at least one hardware token (4) associated to the user.

8. System according to claim 7, **characterized in that** the remote server (3) comprises a receiving unit for receiving data from the input device (2) and a processing unit for processing received data, in particular for converting input data from entry graphics at the input device (2) to alphanumeric symbols and/or for comparing received or processed data to stored information.

9. System according to any of claims 7 or 8, **characterized in that** the hardware token (4) is a mobile end device, in particular a mobile phone or a part thereof.

10. System according to any of claims 7 to 9, **characterized in that** the hardware token (4) has a processing unit for extracting information from information stored in the hardware token (4) and transmitting the extracted information to the remote server (3).
